Europäisches Patentamt

European Patent Office

Office européen des brevets

(19)

(11) Veröffentlichungsnummer: **0 343 467 B1**

# EUROPÄISCHE PATENTSCHRIFT

(12)

(45) Veröffentlichungstag der Patentschrift: **23.12.92**

(51) Int. Cl.⁵: **C09J 133/00**

(21) Anmeldenummer: **89108672.0**

(22) Anmeldetag: **13.05.89**

(54) **An der Luft mit ultravioletten Strahlen vernetzbare Schmelzhaftkleber.**

(30) Priorität: **21.05.88 DE 3817452**

(43) Veröffentlichungstag der Anmeldung:
**29.11.89 Patentblatt 89/48**

(45) Bekanntmachung des Hinweises auf die
Patenterteilung:
**23.12.92 Patentblatt 92/52**

(84) Benannte Vertragsstaaten:
**BE DE FR GB IT NL**

(56) Entgegenhaltungen:

**PATENT ABSTRACTS OF JAPAN vol. 8, no. 24 (C-208)(1461) 2 Februar 1984,& JP-A-58 187476 (KANZAKI SEISHI KK) 1 November 1983,**

(73) Patentinhaber: **BASF Aktiengesellschaft**
**Carl-Bosch-Strasse 38**
**W-6700 Ludwigshafen(DE)**

(72) Erfinder: **Rehmer, Gerd, Dr.**
**Koenigsberger Strasse 1**
**W-6712 Bobenheim-Roxheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Diese Erfindung betrifft Schmelzhaftkleber, die mit UV-Licht an der Luft vernetzt werden können und die verbesserte Anfaßklebrigkeit (Tack), verbesserte Schälfestigkeit und sehr gute Haftung auch auf Metallen aufweisen.

Haftkleber sollen permanente Klebrigkeit, gutes Auffließverhalten auf unterschiedlichen Oberflächen sowie ein ausgewogenes Maß von Adhäsion und Kohäsion besitzen. In der Regel werden mit Haftklebern flächige Substrate beschichtet und so z.B. selbstklebende Klebebänder oder Selbstklebeetiketten hergestellt. Dabei muß häufig der Haftkleber als Lösung in organischen Lösungsmitteln auf das jeweilige Substrat aufgebracht und die Lösungsmittel dann abgedampft werden, so daß im allgemeinen eine Rückgewinnungsanlage für die Lösungsmittel erforderlich ist, da sonst eine starke Umweltbelastung durch Lösungsmitteldämpfe erfolgt.

Derartige Nachteile werden beim Einsatz von wäßrigen Haftkleber-Dispersionen zwar vermieden, doch erfordert das Trocknen von wäßrigen Zubereitungen große Energiemengen und ermöglicht nur verhältnismäßig kleine Fertigungsgeschwindigkeiten.

Der vorteilhafteste Weg zum Aufbringen von Haftklebern ist das Aufbringen einer Schmelze des Klebers, da hierbei keine Lösungsmittel abgetrennt werden müssen.

Als Haftklebstoffe werden hier z.B. Blockcopolymerisate aus Styrol und Isopren oder Butadien eingesetzt, wie sie beispielsweise in der US-PS 3 229 478 beschrieben sind. Schmelzklebstoffe dieser Art erfordern jedoch Temperaturen von meist über 180°C, um beim Beschichtungsvorgang ausreichend fließfähig zu sein. Hinzu kommt eine geringe Beständigkeit dieser Polymerisate gegen Luftsauerstoff, Hitze, Licht und Lösungsmittel. Weiter besitzen derartige Schmelzklebstoffe nur geringe Wärmestandfestigkeit.

Man hat daher schon versucht, durch chemische Reaktionen aus flüssigen Polymergemischen Haftkleber herzustellen. Die Verwendung von Polyestern als Basismaterial für Haftklebstoffe in einem Reaktivsystem ist z.B. aus der DE-PS 3 220 875 bekannt, wonach durch Reaktion von Hydroxypolyestern mit Alkoxysilylverbindungen vernetzbare Polymere entstehen, die aber bei 100°C noch zu langsam vernetzen. Derartigen Reaktivsystemen sind zahlreiche Schwierigkeiten gemeinsam, wie die exakte Dosierung der Reaktivkomponenten, deren nicht ausreichende Reaktionsgeschwindigkeit und besonders die mangelnde Reproduzierbarkeit der Eigenschaften der Haftklebebeschichtung. Schwierigkeiten bereiten bei allen Reaktivsystemen auch die Erzielung der Ausgewogenheit von Adhäsion und Kohäsion des Klebstoffs. Vielfach kommt es zu Nachreaktionen bei der Lagerung des selbstklebenden Produkts, die zu großen Änderungen der Eigenschaften und sogar zum Verlust der Klebrigkeit führen können.

Aus der DE-A 2 838 691 sind zudem durch Strahlung härtbare Massen auf Basis von Acrylpolyestern bekannt, die unter anderem als Klebstoffe für Laminate in Frage kommen. Diese weisen jedoch ungenügenden Tack auf. Auch wurden in der DE-A 3 421 826 schon durch UV-Bestrahlung vernetzbare lagerstabile Urethanharnstoffacrylat-Harze vorgeschlagen, die als Lacke mit guter Haftung auf verschiedenen Substraten eingesetzt werden können. Schließlich sind aus der US-A 4 133 731 strahlenvernetzbare Klebstoffe mit guter Wärmestandfestigkeit und Lösungsmittelbeständigkeit bekannt, die aus Gemischen von insbesondere Styrol-Butadien-Blockcopolymeren, einem klebrig machenden Harz und Polyol-Acrylaten bestehen. Von Nachteil bei der Verarbeitung sind jedoch hohe Gehalte an noch ungebundenen Estern der Methacrylsäure, wodurch entflammbare Dämpfe auftreten können, die zudem die Schleimhaut reizen und stark riechen. Selbst nach der Polymerisation sind bei diesen Systemen im Klebstoff noch verhältnismäßig hohe Gehalte an Restmonomeren festzustellen.

Dies gilt auch für das Verfahren zur Herstellung selbsthaftender Überzüge nach der DE-A 2 357 486, bei dem ein Sirup, bestehend aus einem Acrylestercopolymerisat, monomeren Acrylestern, einer mindestens zweifach olefinisch ungesättigten monomeren Verbindung, wie Trimethylolpropantriacrylat und einem Photosensibilisierungsmittel, z.B. Methylolbenzoinmethylether, Acetophenon oder Benzophenon mit UV-Licht nach dem Auftragen auf eine Folie bestrhalt wird. Diese Haftkleber zeigen zwar bei Raumtemperatur gute Oberflächenklebrigkeit, doch weisen sie starken Fluß und bei höheren Temperaturen ungenügende Scherfestigkeit auf.

Die strahlenhärtbaren Schmelzhaftkleber der US-A 4 052 527 auf Polyacrylatbasis können nur bei hohen Temperaturen verarbeitet werden, erfordern hohe Strahlendosen für die Vernetzung mit der Folge einer Schädigung des Substrats. Diese Nachteile, abgesehen von der hohen Verarbeitungstemperatur, weisen auch die Polyacrylat-Schmelzhaftkleber der US-A 4 438 177 auf. In der DE-A 3 613 082 sind außerdem Haftkleber auf Basis von strahlenvernetzbaren Acryl- und/oder Methacrylgruppen aufweisenden Polyestern beschrieben, die eine gute Klebrigkeit aufweisen, doch zeigen diese Produkte nur geringe Wärmestandfestigkeit. Auch das Herstellverfahren für diese Produkte ist sehr aufwendig.

Ein besonderer Nachteil der bekannten, mit UV-Licht vernetzbaren Beschichtungen ist ihre Empfindlichkeit gegenüber Sauerstoff bei der Vernetzungsreaktion, da Sauerstoff die Polymerisation inhibiert, so daß zum Teil nur ungenügend vernetzt wird und schmierige Oberflächen erhalten werden. Um diese Nachteile zu vermeiden, wird die UV-Bestrahlung im allgemeinen unter Inertgasen, z.B. unter Stickstoff, Edelgasen oder Kohlendioxid durchgeführt. Hierfür ist jedoch ein beachtlicher apparativer Aufwand erforderlich.

Es besteht daher ein Bedarf an Schmelzhaftklebern, die an der Luft vernetzt werden können, die frei von Lösungsmitteln und ungesättigten Monomeren sowie geruchsarm sind, die möglichst wenig verfärben und möglichst farblos sind und die bei Temperaturen von vorzugsweise 20 bis 150°C eine hinreichend geringe Schmelzviskosität aufweisen und die im vernetzten Zustand hohe Anfaßklebrigkeit, hohe Scherfestigkeit und hohe Schälfestigkeit aufweisen.

Es wurde nun gefunden, daß Schmelzhaftkleber auf Basis von

(A) Copolymerisaten eines K-Wertes von 8 bis 60, die hergestellt sind durch Lösungscopolymerisation von

(a) 0,1 bis 20 % ihres Gewichts Tetrahydrofurfuryl-2-(meth)-acrylat und/oder N-2-Tetrahydrofurfuryl-(meth)-acrylamid und/oder Alkoxyalkyl-(meth)-acrylaten und/oder N-Alkoxyalkyl-(meth)-acrylamiden,

(b) 44 bis 99,9 % ihres Gewichts monoolefinich ungesättigten nicht cyclischen unsubstituierten 3 bis 12 C-Atome enthaltenden Monocarbonsäureestern, von denen bis zu 20 Gew.% durch 3 bis 20 C-Atome enthaltende Vinylether, Styrol, α-Methylstyrol, Vinylchlorid, Vinylidenchlorid und/oder Acrylnitril ersetzt sein können,

(c) 0 bis 30 % ihres Gewichts an monoolefinisch ungesättigten 4 bis 25 C-Atome enthaltenden Verbindungen mit mindestens einer Ester-, Carbonamid- oder Carbonimidgruppe, von denen eine zu der olefinischen Doppelbindung benachbart ist, und mit 1 bis 3 Carboxylgruppen, und

(d) 0 bis 6 % ihres Gewichts an α,β-monoolefinisch ungesättigten, 3 bis 6 C-Atome enthaltenden Mono- und/oder Dicarbonsäuren und/oder deren Anhydriden

bei Temperaturen von 70 bis 150°C in Gegenwart von 0,25 bis 10 Gew.%, bezogen auf die Monomeren, an Ketonperoxiden als Polymerisationsinitiatoren und von 15 bis 200 Gew.%, bezogen auf die Monomeren, an indifferenten Lösungsmitteln und Abtrennen der Lösungsmittel während oder nach der Polymerisation, und

(B) 0,01 bis 10 Gew.%, bezogen auf die Summe der Komponenten (A) und (B) an Benzophenon und/oder Benzophenonderivaten an der Luft mit ultravioletten Strahlen vernetzbar sind.

Von den Monomeren (a) werden für die Copolymerisate (A) Tetrahydrofurfuryl-2-acrylat und Tetrahydrofurfuryl-2-methacrylat vorgezogen. Geeignet sind ferner N-2-Tetrahydrofurfuryl-acrylamid und -methacrylamid sowie Alkoxyalkyl-(meth)-acrylate und -(meth)acrylamide, die meist 1 bis 8, vorzugsweise 1 bis 4 C-Atome in den Alkylgruppen haben, wobei Methoxyverbindungen vorgezogen werden. Beispiele hierfür sind 3-Methoxybutyl-(meth)acrylat, 2-Methoxyethyl-acrylat und -methacrylat, 2-Butoxyethyl-acrylat und -methacrylat, 2-Ethoxyethyl-acrylat und -methacrylat, N-n-Butoxymethyl-acrylamid und -methacrylamid und N-Isobutoxymethyl-acrylamid und -methacrylamid sowie N-Methoxyethyl-acrylamid und -methacrylamid. Die Monomeren (a) sind in die Copolymerisate (A) vorzugsweise in einem Anteil von 2 bis 15 Gew.% einpolymerisiert.

Als Monomere (b) enthalten die Copolymerisate (A) monoolefinisch ungesättigte nichtzyklische unsubstituierte 3 bis 12 C-Atome enthaltende Monocarbonsäureester, insbesondere Ester der Acryl- und Methacrylsäure sowie Vinylester einpolymerisiert. Von besonderer Bedeutung als Monomere (b) sind die Acryl- und Methacrylsäureester von 2 bis 8 C-Atome enthaltenden Alkanolen, wie besonders Methylacrylat, Ethylacrylat, n-Butylacrylat und -methacrylat, Isobutyl-acrylat und -methacrylat, Isoamylacrylat und -methacrylat und 2-Ethyl-hexylacrylat und -methacrylat. In Frage kommen ferner Propylacrylat und Isopropylacrylat, Methylmethacrylat (in geringen Anteilen) sowie Decylacrylat und -methacrylat und Dodecylacrylat und -methacrylat. Als Vinylester kommt besonders Vinylpropionat in Frage, geeignet sind ferner Vinylacetat, Vinylformiat und Vinylbutyrat. Ein Gehalt von 56 bis 92,9 % an einpolymerisierten Estern der Acryl- und/oder Methacrylsäure von 2 bis 8 C-Atome enthaltenden Alkanolen ist von besonderem Interesse.

Von den Monomeren (b) können bis zu 20 Gew.% durch 3 bis 20 C-Atome enthaltende Vinylether, wie Vinylmethylether, Vinylpropionat oder Vinyl-2-ethylhexanat.

Styrol, α-Methylstyrol, Vinylchlorid, Vinylidenchlorid und/oder Acrylnitril ersetzt sein, wobei Styrol und Acrylnitril und Mengen bis zu etwa 10 Gew.% von besonderem Interesse sind.

Monomere (c), die in den Copolymerisaten (A) in einem Anteil von bis zu 30 %, vorzugsweise in Mengen von 5 bis 25 Gew.%, einpolymerisiert sein können, sind z.B. Bernsteinsäure-monoester und/oder Monoester von Di- und/oder Tribenzolcarbonsäuren mit Polyhydroxyalkylmono(meth)acrylaten, wie 2-Hydroxylalkylmono(meth)acrylaten und/oder Umsetzungsprodukte von Maleinsäureanhydrid mit Hydroxycarbonsäuren und/oder Aminocarbonsäuren und/oder Maleinimido-N-carbonsäuren, wie Maleinimido-N-hexansäure und/oder Umsetzungsprodukte von Glycidyl(meth)acrylat und Aminocarbonsäuren. Von besonderem Interesse sind dabei Bernsteinsäuremonoester von Alkandiolmonoacrylaten und -monomethacrylaten, wie 1,2-Ethandiol-monoacrylat und -methacrylat, 1,4-Butandiol-monoacrylat und -methacrylat, 1,6-Hexandiol-acrylat und -methacrylat sowie 1,8-Oktandiolmonoacrylat und -monomethacrylat sowie ferner 1,2-Propandiol-monoacrylat und Monomethacrylat. Derartige Alkandiol-mono(meth)acrylate enthalten im Alkandiolrest vorzugsweise 2 bis 4 C-Atome. Die Mitverwendung von Monomeren (C) für die Copolymerisate (A) ist von besonderem Vorteil für eine Erhöhung der Schälfestigkeit und Verminderung der Schmelzviskosität.

Schließlich ist es in manchen Fällen, beispielsweise für eine Erhöhung der Haftung auf metallischen Oberflächen, vorteilhaft, wenn die Copolymerisate (A) bis zu 6 % ihres Gewichts an $\alpha,\beta$-monoolefinisch ungesättigten, 3 bis 6 C-Atome enthaltenden Mono- und/oder Dicarbonsäuren und/oder deren Anhydride (d) einpolymerisiert enthalten. Dabei ist ein Gehalt dieser Monomeren (d) von 0,5 bis 3 % meist von besonderem Interesse. Beispiele für derartige Monomere sind besonders Acrylsäure, Methacrylsäure, Itakonsäure, Fumarsäure sowie Maleinsäureanhydrid. In manchen fällen kommen als zusätzliche Monomere in geringen Mengen die meist im Bereich von 0 bis 3 %, bezogen auf das Copolymerisat (A) liegen, weitere monoolefinisch ungesättigte Monomere (b) in Betracht, die funktionelle Gruppen enthalten, z.B. Acryl- und Methacrylamid, 2-Hydroxyethylacrylat und -methacrylat, 4-Hydroxybutylacrylat und -methacrylat sowie Glycidylacrylat und -methacrylat.

Die Copolymerisate (A) werden bei Temperaturen von 70 bis 120° C, vorzugsweise bei Temperaturen im Bereich von 80 bis 110° C, in Gegenwart von 0,25 bis 10 Gew.%, bezogen auf die Monomeren, an Ketonperoxiden als Polymerisationsinitiatoren und von 15 bis 200, vorzugsweise von 30 bis 50 Gew.%, bezogen auf die Monomeren an indifferenten Lösungsmitteln, d.h. durch Lösungspolymerisation, hergestellt. Als Ketonperoxide kommen vor allem Methylethylketonperoxid, Acetylacetonperoxid, Cyclohexanonperoxid und Methylisobutylketonperoxid.

Von besonderem Interesse als Ketonperoxid sind Methylisobutylketonperoxid und Cyclohexanonperoxid.

Verwendet man bei der Herstellung der Copolymerisate (A) andere übliche Polymerisationsinitiatoren, so erhält man Copolymerisate, die wegen eines verhältnismäßig hohen Gelanteils schlecht für die Herstellung von Schmelzhaftklebern geeignet sind. Auch erhält man keine durch UV-Bestrahlung rasch vernetzbaren Schmelzhaftkleber, wenn man andere, als Photosensibilisatoren übliche aromatische Ketone wie Benzoin oder Acetophenon, oder auch andersartige übliche Photoinitiatoren unter vergleichbaren Bedingungen einsetzt.

Als Lösungsmittel werden vorzugsweise solche eines Siedebereichs von 50 bis 150° C verwendet, die daneben noch kleine Anteile höher- oder niedrigsiedender Komponenten enthalten können. Geeignet sind z.B. Kohlenwasserstoffe, wie Toluol und Benzine, die vorzugsweise einen Siedebereich von 60 bis 120° C haben. Von besonderem Interesse als Lösungsmittel sind Alkohole, wie Methanol, Ethanol, n- und iso-Propanol, wobei Isopropanol und Isobutanol sowie Gemische aus diesen, insbesondere aber Isopropanol besonders bevorzugt werden. Ferner geeignete Lösungsmittel sind Ketone, wie Aceton, Methylethylketon und Ester, wie Essigsäureethylester oder Gemische aus diesen oder Gemische mit Isopropanol und/oder Isobutanol, deren Anteil dann mit Vorteil mindestens 5, insbesondere vorzugsweise 25 Gew.%, bezogen auf das Lösungsmittelgemisch, beträgt.

Für die Durchführung der Polymerisation können dem Reaktionsgemisch auch übliche Regler zugesetzt werden, z.B. sekundäre Alkohole, Mercaptane, wie Mercaptoethanol, Mercaptobernsteinsäure, Mercaptoglycerin, 3-Mercaptopropyltrimethoxysilan, Ether, wie Dioxan und Tetrahydrofuran, Kohlenwasserstoffe, wie Isopropylbenzol und Verbindungen wie Bromoform und Terachlorkohlenstoff. Derartige Regler können in Mengen von 0,01 bis 50 Gew.%, bezogen auf die Summe aus Lösungsmittel und Regler, dem Reaktionsgemisch zugesetzt werden.

Die Polymerisation wird in an sich üblicher Weise in einer Polymerisationsapparatur, die im allgemeinen mit einem Rührer, mehreren Zulaufgefäßen und Rückflußkühler versehen ist, durchgeführt. Im allgemeinen wird dabei ein Kessel eingesetzt, doch können auch mehrere hintereinandergeschaltete Kessel, d.h. eine Kesselkaskade verwendet werden, wobei der letzte Kessel mit einer geeigneten Apparatur zur Entfernung von Lösungsmitteln, z.B. mit einem Fallfilmverdampfer verbunden ist. In einer Kesselkaskade erfolgt die Zugabe der Einsatzstoffe im allgemeinen kontinuierlich, ebenso die Produktentnahme. Das Lösungsmittel kann schon während der Polymerisation, im allgemeinen nach einem Umsatz von etwa 40 bis 50 % allmählich abdestilliert werden, oder aber nach Abschluß der Polymerisation, gegebenenfalls unter Verminderung des Druckes oder Erhöhung der Siedetemperatur des Gemisches. Im allgemeinen wird die Polymerisation derart durchgeführt, daß ein Teil des Lösungsmittels und des Monomerengemisches sowie ein Teil des Polymerisationsinitiators in einem mit Stickstoff gespülten Kessel vorgelegt wird. Die Reaktionsmischung wird dann zum Sieden erhitzt, wobei gegebenenfalls durch Anlegen eines Unterdrucks oder Überdrucks die Siedetemperatur auf dem gewünschten Niveau gehalten wird. Die Menge an Polymerisationsinitiator beträgt vorzugsweise 0,1 bis 6 Gew.%, bezogen auf die Gesamtmenge der Monomeren. Nach einer Anpolymerisationsphase wird das restliche Monomerengemisch und gegebenenfalls weiterer Polymerisationsinitiator sowie gegebenenfalls weiteres Lösungsmittel zugegeben. Die Polymerisationstemperatur wird bevorzugt unter 120°C, besonders bevorzugt unter 100°C, insbesondere unter 80°C, gehalten. Nach beendeter Polymerisation wird das Lösungsmittel im allgemeinen im Polymerisationskessel abgedampft, wobei Lösungsmittelreste unter vermindertem Druck, gegebenenfalls bei erhöhter Temperatur, entfernt werden. Das Copolymerisat (A) wird dann im allgemeinen als Schmelze aus der Polymerisationsapparatur ausgetragen. Es ist aber auch in manchen Fällen von Vorteil, das Lösungsmittel in nachgeschalteten Apparaten, z.B. in einem Fallfilmverdampfer, abzutrennen.

Die Copolymerisate (A) werden dabei im allgemeinen mit einem K-Wert, gemessen bei 25°C in 1 %iger Lösung in Tetrahydrofuran (nach DIN 53 726) von 8 bis 60 gewonnen und K-Werte von 12 bis 60, insbesondere von 16 bis 40, sind von besonderem Interesse. Ihre Glastemperaturen in unvernetztem Zustand liegen vorzugsweise unter 0°C, insbesondere unter -10°C. Zur Herstellung der mit ultravioletten Strahlen vernetzbaren Schmelzhaftkleber werden dann in die Copolymerisate (A) noch 0,01 bis 10, insbesondere 0,05 bis 5 Gew.%, vorzugsweise 0,1 bis 2 Gew.%, bezogen auf das Copolymerisat (A), Benzophenon und/oder Benzophenonderivate eingearbeitet. Als Benzophenonderivate kommen vor allem Hydroxyphenone wie 3-Hydroxybenzophenon und 4-Hydroxybenzophenon, sowie Benzophenoncarbonsäuren, wie Benzophenon-2-carbonsäure, Benzophenon-3-carbonsäure, Benzophenon-4-carbonsäure, 3,3′-, 4 ,4′-Benzophenontetracarbonsäure. Von Interesse sind ferner 3,3′-, 4,4′-Benzophenontetracarbonsäuredianhydrid, 3,3′-, 4,4′-Tetra-(tert.-butylperoxicarbonyl)benzophenon, 2-, 3- und 4-Alkylbenzophenone mit 1 bis 10 C-Atomen im Alkylrest, wie 2-, 3- und 4-Methylbenzophenon, 2-, 3- und 4-Nonylbenzophenon, Dialkylbenzophenone, wie 4,4′-Diisopropylbenzophenon und halogenierte (Monoalkyl)benzophenone, wie 4-(Trifluormethyl)benzophenon und 3,3′-Dimethyl-4-methoxybenzophenon, 4-Aminobenzophenon, 4-Aminobenzophenonhydrochlorid, -sulfat und -hydrogensulfat, 4,4′-Tetramethylaminobenzophenon sowie olefinisch ungesättigte Benzophenonderivate, wie sie unter dem Handelsnamen ®Uvecryl P 36 (UCB) im Handel erhältlich sind. In manchen Fällen ist es von Vorteil, Benzophenon und/oder Benzophenonderivate der genannten Art dem Copolymerisat (A) unmittelbar nach seiner Herstellung zuzufügen, solange beispielsweise noch Lösungsmittel im Polymerisationsgemisch vorliegen, um so eine besonders gleichmäßige Verteilung der beiden Komponenten ineinander zu erreichen.

In manchen Fällen hat es sich als vorteilhaft erwiesen, den erfindungsgemäßen Schmelzhaftklebern noch 1 bis 25 % des Gewichts aus den Komponenten (A) und (B), insbesondere 2 bis 10 Gew.% an (C) mehrfach olefinisch ungesättigten Polyethern und/oder Polyestern eines mittleren Molekulargewichts (Zahlenmittel) von 250 bis 5.000 zuzusetzen. Geeignet sind z.B. mit Acrylsäure umgesetzte Polyesterole und Polyetherole, wie sie z.B. unter den Handelsnamen ARONIX® M-6100, M-6200, M-6250, M-7100 und M-8030 (Toagosei Chemical Ind.) im Handel sind. Geeignete Polyetherole sind auch Tripropylenglykoldiacrylat, Tetraethylenglykoldiacrylat sowie Diacrylate von Polyethylenglykolen und Polypropylenglykolen. Von besonderem Interesse als Zusatz eines mehrfach ungesättigten Polyethers sind Diacrylate und Dimethacrylate von Polytetrahydrofuranen, wobei die Polytetrahydrofurane Molekulargewichte von beispielsweise 250, 650, 1.000 oder 2.000 aufweisen können. Derartige mehrfach olefinisch ungesättigte Polyether und/oder Polyester werden im allgemeinen als Komponente (C) vorgezogen, doch kommen auch monolefininisch ungesättigte Polyetherole, z.B. Monoacrylate oder Monomethacrylate von ethoxylierten und/oder propoxylierten Alkanolen, wie die Handelsprodukte ARONIX® M-101 und M-111 (Toagosei Chemical Ind.) in Frage. Durch derartige Zusätze an Komponente (C) wird in vielen Fällen die Schmelzviskosität der Schmelzhaftkleber und Wärmestandfestigkeit von vernetzten Verklebungen verbessert und bei der Verwendung von Diacrylaten oder Dimethacrylaten von Polytetrahydrofuranen erhält man vernetzte Produkte, die sich durch überraschend hohen Glanz auszeichnen. Ein Zusatz von diolefinisch ungesättigten Polytetrahydrofuranen zu den Schmelzhaftklebern wird daher vorgezogen.

In manchen Fällen, wenn die Copolymerisate A 10 bis 25 % ihres Gewichts an Monomeren C) einpolymerisiert enthalten, ist es von besonderem Vorteil, den Schmelzhaftklebern zusätzlich noch 0,05 bis 0,5 Gew.%, bezogen auf die Komponenten (A), (B) und (C) eines Reduktionsmittels (D) zuzusetzen.

Als Komponente (D) werden bevorzugt Cobalt(II)-salze, wie Co(II)-octoat, Co(II)-naphthenat, Co(II)-acetylacetonat, Co(II)-acetat, Co(II)-phthalocyanin, Mangan(II)-salze, wie Mn(II)-acetat, Mn(II)-acetylacetonat, Vanadin(III)- und -IV-salze, wie Vanadin(III)-acetylacetonat und Vanadin(IV)-oxiacetylacetonat, Redox-Systeme, wie Fe(III)-salze, wie Eisen(II)oxalat, in Kombination mit z.B. Glucose, wie Eisen(II)oxalat, quaternäre Ammoniumsalze, wie Tetra-n-butylammoniumbromid, Tetra-n-butylammoniumiodid, sowie Alkali- und/oder Erdalkalibromide und -iodide, wie z.B. Kaliumiodid und Magnesiumbromid, Hydrochinon, Hydrochinonmonomethylether, Di-tert.-butyl-p-kresol, tert.-Butyl-catechol, Natriumdiethyldithiocarbaminat, Diethylthiocarbaminat, Hydroxymethansulfinsäure und z.B. das Natriumsalz der Hydroxymethansulfinsäure, aliphatische und/oder aromatische tertiäre Amine, wie Dimethylanilin, Diethylanilin und Dimethy-p-toluidin.

Die Komponenten (D) werden den Komponenten (A), (B) und (C) im allgemeinen nach deren Vermischen zugesetzt, doch können sie auch zunächst mit einer der anderen Komponente, z.B. den Copolymerisaten (A) (nach deren Herstellung vorzugsweise vor dem Abtrennen der Lösungsmittel) zugegeben werden.

Die neuen Massen können in an sich üblicher Weise modifiziert und/oder konfektioniert werden. Beispielsweise können übliche klebrig machende Harze, z.B. Kohlenwasserstoffharze, gegebenenfalls modifizierte Collophoniumharze, Terpenphenolharze, Ketonharze, Aldehydharze oder Homopolymerisate, wie Poly-2-ethylhexylacrylat und Poly-n-butylacrylat, ferner Weichmacher, z.B. auf Basis von Mono-, Di- oder Polyesterverbindungen, polychlorierten Kohlenwasserstoffen oder Paraffinölen, Farbstoffe, Pigmente oder Stabilisatoren oder kautschukelastische Stoffe wie Natur- oder Synthesekautschuk, Polyvinylether sowie ferner Polybutadienöle in geringen Mengen zugesetzt werden.

Die neuen Schmelzhaftkleber können in an sich üblicher Weise verarbeitet werden. Dabei reichen im allgemeinen Temperaturen der Schmelze im Bereich von 80 bis 150°C aus. Die Viskosität der neuen Schmelzhaftkleber beträgt in diesem Temperaturbereich etwa 6 bis 60 pa.s. Die Schmelzen können leicht mit Hilfe der üblichen Auftragsvorrichtungen, z.B. Breitschlitzdüsen, auf flächige Gebilde, wie Folien, Papier und Pappe sowie Holz und Metalle aufgebracht werden. Als Substrate geeignete Folien können z.B. aus Polyethylen, Polyamiden, Polyethylenglykolterephthalat, Polypropylen, Polyvinylchlorid oder Aluminium bestehen. Die mit den Schmelzhaftklebern erhaltenen Beschichtungen können durch Bestrahlen mit ultraviolettem Licht an der Luft vernetzt werden, wobei man gut klebende Überzüge erhält, die eine hohe Kohäsion und gute Schälfestigkeit bei vorzüglicher Alterungsbeständigkeit aufweisen. Ein Arbeiten unter Inertgasatmosphäre ist nicht erforderlich, bringt jedoch auch keine Vorteile. Für das Bestrahlen können die üblichen UV-Strahler, z.B. Hg-Niederdruck- und Hg-Hochdrucklampen eingesetzt werden, die Leistungen bis zu 100 W/cm und mehr aufweisen.

Die Klebeeigenschaften von flächigen Substraten, die eine Haftklebeschicht aufweisen, kann durch Messen der Scherfestigkeit als Maß für die Kohäsion und der Schälfestigkeit als zusammenfassendes Maß für Kohäsion und Oberflächenklebrigkeit erfaßt werden.

Für die Prüfung werden Folien aus Polyethylenglykolterephthalat und Polypropylen derart beschichtet, daß sich ein Auftragsgewicht von 25 g/qm ergibt. Die Lösungsmittel werden 1 Minute bei 70°C und 1 bar abgedampft. Die beschichteten Folien werden mit dem Licht einer Quecksilber-Hochdrucklampe einer Leistung von 80 Watt/cm bestrahlt.

Die Folien werden dann auf ein laufendes Endlosband gelegt, so daß sie im Abstand von 15 cm mit einer Geschwindigkeit von 10 m/min unter der Lampe hindurchlaufen; der Bestrahlungsvorgang wird einmal wiederholt. Die Bestrahlung erfolgt an der Luft.

Von den so hergestellten Folien werden 2 cm breite Streifen geschnitten und diese Streifen auf eine verchromte Messingplatte aufgebracht. Die Platte wird dann mit den Streifen 24 Stunden bei 23°C und 65 % relativer Luftfeuchtigkeit gelagert.

Zur Messung der Schälfestigkeit werden die Prüfstreifen parallel zur Klebeschicht mit einer Geschwindigkeit von 300 mm/min rückwärts abgezogen. Die hierfür erforderliche Kraft wird gemessen.

Bei der Messung der Scherfestigkeit wird ein Prüfstreifen mit einer Fläche von 20 x 45 mm auf eine verchromte Messingplatte geklebt, die senkrecht eingespannt ist, und der überhängende Teil des Klebestreifens mit einem Gewicht von 1 kg belastet. Es wird die Zeit bestimmt, bis sich die Verklebung löst. Die Messung wird bei 23°C durchgeführt. Alle Messungen werden 3-fach durchgeführt.

Die in den folgenden Beispielen angegebenen Teile und Prozente beziehen sich auf das Gewicht. Die K-Werte werden nach DIN 53 726 in 1 %iger Lösung in Tetrahydrofuran als Lösungsmittel bei 25°C bestimmt. Die Schmelzviskositäten der Copolymerisate werden mit einem Rotationsviskosimeter mit Kegel-Platte-System (Fa. Haake, Karlsruhe) bei der angegebenen Temperatur bestimmt; die Schergeschwindigkeit D beträgt, wenn nicht anders angegeben, 100 l/s.

Beispiel 1

Eine Mischung aus 200 Teilen Isopropanol, 4 Teilen Methylethylketonperoxid und 320 Teilen einer Monomerenmischung aus 735 Teilen 2-Ethylhexylacrylat, 140 Teilen n-Butylacrylat, 25 Teilen Acrylsäure und 100 Teilen Tetrahydrofurfuryl-2-acrylat wird unter Rückfluß anpolymerisiert. Nach 20 Minuten wird der Rest der Monomerenmischung und gleichzeitig eine Mischung aus 16 Teilen Methylethylketonperoxid und 50 Teilen Isopropanol in 2 Stunden zugegeben und danach noch 4 Stunden unter Rückfluß gerührt. Man erhält eine klare gelkörperfreie Lösung eines Copolymerisat (A1) des K-Werts 25. Von der Lösung wird das Lösungsmittel bei 130°C zuletzt unter vermindertem Druck (0,1 bar) abgedampft.

100 Teile des Copolymerisats (A1) werden bei 60°C mit 2 Teilen Benzophenon gemischt. Mit dem erhaltenen Schmelzhaftkleber wird eine Polyethylenterephthalatfoliederart beschichtet, daß sich eine

6

EP 0 343 467 B1

Schichtdicke von 25 µm ergibt. Die Folie wird anschließend an der Luft wie angegeben mit ultraviolettem Licht bestrahlt. Man erhält eine Haftkleberfolie mit guter Haftfestigkeit. Die Scherfestigkeit bei 23°C beträgt > 100 Stunden, die Schälfestigkeit nach 24 Stunden 5,5 N/2 cm.

Vergleichsversuch 1

Zum Vergleich wird die Herstellung des Copolymerisats wie bei Beispiel 1 beschrieben mit der Maßgabe wiederholt, daß anstelle des Methylethylketonperoxids die gleiche Menge Lauroylperoxid eingesetzt wird. Erhalten wird ein unvernetztes, gelkörperhaltiges Copolymerisat (A1), das sich nicht für Schmelzhaftkleber eignet.

Copolymerisat (A2)

Ein Gemisch aus 100 Teilen Isopropanol, 1 Teil Methylethylketonperoxid und 160 Teilen von insgesamt 500 Teilen eines Monomerengemisches aus 367,5 Teilen 2-Ethylhexylacrylat, 75 Teilen des Umsetzungsproduktes von 1,4-Butandiolmonoacrylat mit Bernsteinsäureanhydrid, 12,5 Teilen Acrylsäure und 45 Teilen Tetrahydrofurfuryl-2-acrylat wird zum Sieden erwärmt. Innerhalb von 2 Stunden gibt man unter Rückfluß den Rest der Monomerenmischung zu. Anschließend läßt man innerhalb einer Stunde eine Mischung aus 7,5 Teilen Methylethylketonperoxid und 25 Teilen Toluol zulaufen und rührt noch 4 Stunden bei leichtem Sieden unter Rückfluß nach.
Das Lösemittel und flüchtige Anteile werden bei 120°C zunächst bei Normaldruck und anschließend unter vermindertem Druck (0,1 bar) entfernt.
Man erhält ein Copolymerisat (A2) vom K-Wert 18. Die Schmelzviskosität bei 80°C beträgt 8 Pa.s.

Copolymerisat (A3)

Ein Gemisch aus 100 Teilen Isopropanol, 1 Teil Cyclohexanonperoxid und 160 Teile einer Monomerenmischung aus 380 Teilen 2-Ethylhexylacrylat, 75 Teilen des Umsetzungsproduktes aus 1,2-Ethandiolmonoacrylat mit Bernsteinsäureanhydrid und 45 Teilen Tetrahydrofurfuryl-2-acrylat werden zum Sieden unter Rückfluß erwärmt. Innerhalb von 2 Stunden gibt man den Rest der Monomerenmischungen, wobei die Reaktionsmischung unter leichtem Sieden unter Rückfluß gehalten wird, rührt anschließend noch 30 Minuten nach und gibt dann 57,5 Teile einer Mischung aus 7,5 Teilen Cyclohexanperoxid, 25 Teilen Toluol und 25 Teilen Isopropanol zu und läßt noch 5 Stunden unter Rückfluß sieden.
Das Lösemittel und flüchtige Anteile werden wie bei Copolymerisat (A2) angegeben entfernt. Man erhält ein Copolymerisat (A3) vom K-Wert 21, dessen Schmelzviskosität bei 80°C 10 Pa.s beträgt.

Copolymerisat (A4)

Man verfährt wie bei Copolymerisat (A3) angegeben, ersetzt jedoch das Tetrahydrofurfuryl-2-acrylat durch die gleiche Menge 3-Methoxybutylacrylat.
Das Lösemittel wird wie angegeben abgetrennt.
Man erhält ein Copolymerisat (A4) vom K-Wert 28, dessen Schmelzviskosität bei 50°C 35 Pa.s beträgt.

Copolymerisat (A5)

Zu einer Mischung aus 100 Teilen Isopropanol und 2 Teilen Methylethylketonperoxid gibt man unter leichtem Sieden (Rückfluß) innerhalb von 15 Minuten 160 Teile einer Monomerenmischung aus 380 Teilen 2-Ethylhexylacrylat, 12,5 Teilen Acrylsäure, 45 Teilen Tetrahydrofurfuryl-2-acrylat und 62,5 Teilen Maleinimido-N-hexansäure. Nach weiteren 15 Minuten gibt man den Rest der Monomerenmischung innerhalb von 2 Stunden zu und rührt 30 Minuten bei Rückflußtemperatur nach. Anschließend wird innerhalb von 1 Stunde eine Mischung von 8 Teilen Methylethylketonperoxid in 1 Stunde zugegeben und noch 4 Stunden bei Rückflußtemperatur nachgerührt. Das Lösemittel und flüchtige Anteile werden unter vermindertem Druck (0,1 bar) bei 120°C abgedampft. Man erhält ein Copolymerisat (A5) vom K-Wert 20, dessen Schmelzviskosität bei 80°C 9 Pa.s beträgt.

Beispiele 2 bis 5

Für die Prüfung werden folgende Schmelzhaftkleber durch Vermischen mit Benzophenon-Verbindungen

7

in der Schmelze der Copolymerisate (A2)-(A5) hergestellt.

Tabelle 1

| Beispiel | Copolymerisat [Gew.%] | Benzophenon-Verbindung [Gew.%] |
|---|---|---|
| 2 | 98,0 (A2) | 2,0 Benzophenon |
| 3 | 97,0 (A3) | 3,0 Benzophenon |
| 4 | 99,0 (A4) | 1,0 Benzophenon |
| 5 | 97,0 (A5) | 3,0 4-Hydroxybenzophenon |

Die damit nach UV-Bestrahlung (an der Luft) gemessenen Werte sind in der folgenden Tabelle 2 zusammengestellt:

Tabelle 2

| Ergebnisse der Bestrahlungsversuche | | | | |
|---|---|---|---|---|
| Beispiel | Kohäsion [Stunden] | | Schälfestigkeit (nach 24 Stunden) [N/2 cm] | Beurteilung der Klebrigkeit |
| | bei 23°C | bei 50°C | | |
| 2 | > 100 | > 1 | 7,0 | gut klebrig |
| 3 | > 100 | > 2 | 8,0 | gut klebrig |
| 4 | > 100 | > 1 | 8,5 | gut klebrig |
| 5 | > 100 | > 5 | 10,5 | gut klebrig |

Vergleichsversuche 2 und 3

Zum Vergleich wird nach dem Beispiel der DE-A 2 357 486 ein bei Raumtemperatur gießbares Copolymerisat aus 20 % Vinylacetat und 80 % n-Butylacrylat vom K-Wert 19 (gemessen 1 %ig in Ethylacetat) hergestellt und 12 Teile 2-Ethylhexylacrylat und 10 Teile Trimethylolpropantriacrylat zugegeben. Ein Anteil des Gemisches wird mit 2,2 Gew.% Benzophenon (Vergleichsversuch 2), der andere mit 2,2 Gew.% Methylolbenzoinmethylether (Vergleichsversuch 3) vermischt, die Gemische in einer Dicke von 25 μm auf Polyethylenglykolterephthalat-folien aufgebracht und die Klebewerte gemessen. Die Ergebnisse sind in der folgenden Tabelle 3 zusammengestellt:

Tabelle 3

| Ergebnisse der Vergleichsversuche | | | | |
|---|---|---|---|---|
| Vergleichsversuch | Kohäsion [Stunden] | | Schälfestigkeit (nach 24 Stunden) [N/2 cm] | Klebrigkeit |
| | bei 23°C | bei 50°C | | |
| 2 | < 0,1 | < 0,1 | 6,5 | schmierige Schicht |
| 3 | < 0,1 | < 0,1 | 7,0 | schmierige Schicht |

Beispiele 6 und 7

Herstellung von Copolymerisat (A6)

Ein Gemisch aus 140 Teilen Toluol, 2,8 Teilen Methylisobutylketonperoxid und 220 Teilen einer Monomerenmischung aus 630 Teilen 2-Ethylhexylacrylat, 2,5 Teilen Acrylsäure und 52,5 Teilen Tetrahydrofurfuryl-2-acrylat wird auf Rückflußtemperatur erwärmt. Innerhalb von 2 Stunden wird der Rest

8

der Monomerenmischung und gleichzeitig eine Mischung aus 50 Teilen Toluol und 10,5 Teilen Methylisobutylketonperoxid unter Rückfluß zugegeben und noch 4 Stunden nachgerührt.

Das Lösemittel wird dann bei 130°C unter vermindertem Druck entfernt. Das Copolymerisat (A6) hat den K-Wert 27 und die Schmelzviskosität (80°C) 25 pa.s.

Das Lösemittel wird bei 100°C unter vermindertem Druck entfernt. Das erhaltene Copolymerisat (A7) hat den K-Wert 32 und die Schmelzviskosität (80°C) 35 pa.s.

Herstellung und Prüfung der Schmelzhaftkleber der Beispiele 6 und 7

Für die Herstellung der Schmelzhaftkleber werden Benzophenon und zwei Poly-tetrahydrofuran-di-(meth)acrylate zugesetzt, die sich von Polytetrahydrofuran eines mittleren Molekulargewichts (Zahlenmittel) von 650 bzw. von 2.000 ableiten, nämlich Poly-THF-650-diacrylat und Poly-THF-2000-dimethacrylat, wobei die Komponenten in einem heizbaren Mischaggregat bei 100°C zu einer homogenen Masse verknetet werden. Die jeweiligen Mengen und die Schmelzviskositäten der Schmelzhaftkleber sind in der folgenden Tabelle 3 zusammengestellt.

Tabelle 3

| Beispiel | Copolymerisat (Teile) | Poly-THF-diacrylat (Teile) | Benzophenon (Teile) | Schmelzviskosität bei 80°C [Pa.s] |
|---|---|---|---|---|
| 6 | A6 95,0 | P-THF-650 5,0 | 0,25 | 20 |
| 7 | A7 90,0 | P-THF-2000 10,0 | 0,30 | 30 |

Mit dem Schmelzhaftkleber werden Folien in üblicher Weise beschichtet, die beschichteten Folien mit UV-Licht wie angegeben bestrahlt und dann die Klebewerte gemessen. Diese sind in den folgenden Tabellen 4 und 5 zusammengestellt:

Tabelle 4

Ergebnisse der Klebewert-Prüfung

Beschichtung: 25 g/qm, Folie: Polypropylenfolie, 40 µum,

Bestrahlung an der Luft

| Beispiel | Kohäsion [Stunden] | | Schälfestigkeit (nach 24 Stunden) [N/2 cm] | Bemerkungen |
|---|---|---|---|---|
| | bei 23°C | bei 50°C | | |
| 6 | > 300 | > 15 | 6,5 | hochglänzende, transparente Beschichtung |
| 7 | > 300 | > 15 | 7,0 | " |

Herstellung von Copolymerisat (A8)

Zu einem Gemisch aus 160 Teilen Ethylacetat, 50 Teilen Tetrahydrofuran und 8 Teilen Cyclohexanonperoxid gibt man 200 Teile einer Monomerenmischung aus 600 Teilen n-Butylacrylat, 250 Teilen 2-Ethylhexylacrylat, 100 g Methylacrylat und 50 Teilen N-2-Tetrahydrofurfurylmethacrylamid und polymerisiert unter Rückfluß 20 Minuten an. Im Verlauf von weiteren 2 Stunden gibt man den Rest der Monomermischung und gleichzeitig eine Lösung von 8 Teilen Methylethylketonperoxid in 123 Teilen Ethylacetat hinzu. Nach beendeter Zugabe rührt man noch 4 Stunden bei Rückflußtemperatur nach. Man erhält ein Copolymerisat vom K-Wert 35.

Das Lösemittelgemisch und flüchtige Anteile destilliert man bei 100°C ab, reduziert den Druck und erhöht die Temperatur auf 130°C. Man erhält ein Copolymerisat mit einer Schmelzviskosität von 8 Pa.s bei 120°C (D = 100 l/s).

In die Schmelze rührt man 0,75 Gew.% (bezogen auf Harz) Benzophenon ein.

Von dem Harz werden 200 Teile abgetrennt und mit 20 Teilen handelsüblichem Tackifier (Foral 85® der Firma Hercules Inc.) vermischt.

Auf einem beheizbaren Streichtisch werden Polyethylenglykolterephthalatfolien bei 110°C mit 25 g/m² des Copolymerisats beschichtet. Die Beschichtungen werden anschließend wie angegeben an der Luft bestrahlt und die Klebeprüfungen durchgeführt.

Tabelle 5

| Ergebnisse der Klebewert-Prüfungen | | | | |
|---|---|---|---|---|
| Beispiel | Kohäsion [Stunden] | | Schälfestigkeit (nach 24 Stunden) [N/2 cm] | Bemerkungen |
| | bei 23°C | bei 50°C | | |
| Copolymerisat A8<br>A8 + Tackifier | > 100<br>> 100 | > 5<br>> 2 | 6,5<br>8,5 | klebrig<br>klebrig |

**Patentansprüche**

1. An der Luft mit ultravioletten Strahlen vernetzbare Schmelzhaftkleber auf Basis von

(A) Copolymerisaten eines K-Wertes von 8 bis 60, die hergestellt sind durch Lösungscopolymerisation von

(a) 0,1 bis 20 % ihres Gewichts Tetrahydrofurfuryl-2-(meth)acrylat und/oder N-2-Tetrahydrofurfuryl-(meth)-acrylamid und/oder Alkoxyalkyl-(meth)acrylaten und/oder N-Alkoxyalkyl-(meth)acrylamiden,

(b) 44 bis 99,9 % ihres Gewichts monoolefinisch ungesättigten nichtcyclischen unsubstituierten 3 bis 12 C-Atome enthaltenden Monocarbonsäureestern, von denen bis zu 20 Gew.% durch 3 bis 20 C-Atome enthaltende Vinylether, Styrol, α-Methylstyrol, Vinylchlorid, Vinylidenchlorid und/oder Acrylnitril oder 0 bis 3 Gew.%, bezogen auf das Copolymerisat (A) durch monoolefinisch ungesättigte Monomere, ausgewählt aus Acryl-, Methacrylamid, 2-Hydroxyethyl(meth)acrylat, 4-Hydroxybutyl(meth)acrylat und Glycidyl(meth)acrylat, ersetzt sein können.

(c) 0 bis 30 % ihres Gewichts an monoolefinisch ungesättigten 4 bis 25 C-Atome enthaltenden Verbindungen mit mindestens einer Ester-, Carbonamid- oder Carbonimidgruppe, von denen eine zu der olefinischen Doppelbindung benachbart ist, und mit 1 bis 3 Carboxylgruppen, und

(d) 0 bis 6 % ihres Gewichts an α,β-monoolefinisch ungesättigten, 3 bis 6 C-Atome enthaltenden Mono- und/oder Dicarbonsäuren und/oder deren Anhydriden

bei Temperaturen von 70 bis 150°C in Gegenwart von 0,25 bis 10 Gew.%, bezogen auf die Monomeren, an Ketonperoxiden als Polymerisationsinitiatoren und von 15 bis 200 Gew.%, bezogen auf die Monomeren, an indifferenten Lösungsmitteln, und Abtrennen der Lösungsmittel während oder nach der Polymerisation, und

(B) 0,01 bis 10 Gew.%, bezogen auf die Summe der Komponenten (A) und (B) an Benzophenon und/oder Benzophenonderivaten.

2. Schmelzhaftkleber nach Anspruch 1, dadurch gekennzeichnet, daß das Copolymerisat (A) durch Lösungscopolymerisation von

(a) 2 bis 15 % seines Gewichts an Tetrahydrofurfuryl-(meth)acrylat,

(b) 56 bis 92,9 % seines Gewichts an Estern an (Meth)acrylsäure und 2 bis 8 C-Atome enthaltenden Alkanolen,

(c) 5 bis 25 % seines Gewichts an Bernsteinsäuremonoester von Alkandiol-mono-(meth)acrylat und

(d) 0.1 bis 4 % seines Gewichts Acryl- und/oder Methacryl- und/oder Maleinsäure und/oder deren Anhydriden

bei Temperaturen im Bereich von 80 bis 110°C in Gegenwart von 30 bis 50 Gew.%, bezogen auf die Monomeren, Isopropanol und/oder Isobutanol hergestellt ist.

**3.** Schmelzhaftkleber nach den Ansprüchen 1 und 2, dadurch gekennzeichnet, daß sie als Komponente (B) 0,5 bis 5 Gew.%, bezogen auf die Komponenten (A) und (B) an Benzophenon, einem Hydroxybenzophenon und/oder an Benzophenoncarbonsäuren enthalten.

**4.** Schmelzhaftkleber nach den Ansprüchen 1 bis 4, dadurch gekennzeichnet, daß sie 1 bis 25 % ihres Gewichts an (C) olefinisch ungesättigten Polyethern und/oder Polyestern eines mittleren Molekulargewichts (Zahlenmittel) von 250 bis 5000 enthalten.

**5.** Schmelzhaftkleber nach den Ansprüchen 1 bis 4, dadurch gekennzeichnet, daß sie als Polyether ein diolefinisch ungesättigtes Polytetrahydrofuran enthalten.

**6.** Schmelzhaftkleber nach den Ansprüchen 4 und 5, dadurch gekennzeichnet, daß die Copolymerisate A 10 bis 25 % ihres Gewichts der Komponente (c) und die Schmelzhaftkleber zusätzlich 0,05 bis 5 Gew.%, bezogen auf die Mengen der Komponenten (A), (B) und (C), eines Reduktionsmittels (D) enthalten.

### Claims

**1.** A hotmelt contact adhesive which is crosslinkable with ultraviolet radiation in the air and is based on
   (A) copolymers which have a K value of from 8 to 60 and are prepared by solution copolymerization of
       (a) from 0.1 to 20%, based on the weight of the copolymers, of tetrahydrofurfur-2-yl (meth)acrylate and/or N-2-tetrahydrofurfuryl (meth)acrylamide and/or alkoxyalkyl (meth)acrylates and/or N-alkoxyalkyl (meth)acrylamides,
       (b) from 44 to 99.9%, based on the weight of the copolymers, of monoolefinically unsaturated acyclic unsubstituted monocarboxylates of 3 to 12 carbon atoms, up to 20% by weight of which may be replaced by vinyl ethers of 3 to 20 carbon atoms, styrene, $\alpha$-methylstyrene, vinyl chloride, vinylidene chloride and/or acrylonitrile or from 0 to 3% by weight, based on the copolymer (A), by monoolefinically unsaturated monomers selected from the group consisting of acrylamide, methacrylamide, 2-hydroxyethyl (meth)acrylate, 4-hydroxybutyl (meth)acrylate and glycidyl (meth)acrylate,
       (c) from 0 to 30%, based on the weight of the copolymers, of monoolefinically unsaturated compounds of 4 to 25 carbon atoms having one or more ester, carboxamide or carboximide groups, one of which is adjacent to the olefinic double bond, and having 1 to 3 carboxyl groups, and
       (d) from 0 to 6%, based on the weight of the copolymers, of $\alpha,\beta$-monoolefinically unsaturated mono- and/or dicarboxylic acids of 3 to 6 carbon atoms and/or their anhydrides.
   at from 70 to 150°C in the presence of from 0.25 to 10% by weight, based on the monomers, of a ketone peroxide as a polymerization initiator and from 15 to 200% by weight, based on the monomers, of inert solvents, and removal of the solvents during or after the polymerization, and
   (B) from 0.01 to 10% by weight, based on the sum of the components (A) and (B), of benzophenone and/or benzophenone derivatives.

**2.** A hotmelt contact adhesive as claimed in claim 1, wherein the copolymer (A) is prepared by solution copolymerization of
       (a) from 2 to 15%, based on the weight of the copolymer, of tetrahydrofurfuryl (meth)acrylate,
       (b) from 56 to 92.9%, based on the weight of the copolymer, of esters of (meth)acrylic acid and alkanols of 2 to 8 carbon atoms,
       (c) from 5 to 25%, based on the weight of the copolymer, of succinic monoesters of alkanediol mono(meth)acrylates and
       (d) from 0.1 to 4%, based on the weight of the copolymer, of acrylic and/or methacrylic and/or maleic acid and/or their anhydrides
   at from 80 to 110°C in the presence of from 30 to 50% by weight, based on the monomers, of isopropanol and/or isobutanol.

**3.** A hotmelt contact adhesive as claimed in claims 1 and 2, which contains, as component (B), from 0.5 to 5% by weight, based on the components (A) and (B), of benzophenone, a hydroxybenzophenone and/or a benzophenonecarboxylic acid.

**4.** A hotmelt contact adhesive as claimed in any of claims 1 to 4, which contains from 1 to 25%, based on the weight of the said adhesive, of (C) olefinically unsaturated polyethers and/or polyesters having a mean molecular weight (number average) of from 250 to 5,000.

**5.** A hotmelt contact adhesive as claimed in any of claims 1 to 4, which contains a diolefinically unsaturated polytetrahydrofuran as the polyether.

**6.** A hotmelt contact adhesive as claimed in claims 4 and 5, wherein the copolymer A contains from 10 to 25%, based on the weight of the copolymer, of component (C) and the hotmelt contact adhesive additionally contains from 0.05 to 5% by weight, based on the amounts of components (A), (B) and (C), of a reducing agent (D).

**Revendications**

**1.** Colle thermofusible, réticulable à l'air avec des rayons ultra-violets, à base
(A) de copolymères d'une valeur K de 8 à 60, qui ont été préparés par copolymérisation en solution de
(a) 0,1 à 20 % de leurs poids de 2-(méth)acrylate de tétrahydrofurfuryle et/ou de N-2-tétrahydrofurfuryl-(méth)-acrylamide et/de (méth)acrylates d'alcoxyalkyle et/ou de N-alcoxyalkyl (méth)acrylamides,
(b) 44 à 99,9 % de leur poids d'esters d'acides monocarboxyliques contenant de 3 à 12 atomes de carbone, monooléfiniquement insaturés, acycliques, non substitués, dont jusqu'à 20 % en poids peuvent être remplacés par des éthers vinyliques contenant de 3 à 20 atomes de carbone, le styrène, l'alpha-méthylstyrène, le chlorure de vinyle, le chlorure de vinylidène et/ou l'acrylonitrile, ou 0 à 3 % en poids, par rapport aux copolymères (A), par des monomères monooléfiniquement insaturés, choisis parmi l'acrylamide, le méthacrylamide, le (méth)acrylate de 2-hydroxyéthyle, le (méth)acrylate de 4-hydroxybutyle et le (méth)acrylate de glycidyle,
(c) 0 à 30 % de leur poids de composés monooléfiniquement insaturés, contenant de 4 à 25 atomes de carbone, avec au moins un radical ester, carboxamide ou carboximide, dont l'un est voisin de la double liaison oléfinique et avec de 1 à 3 radicaux carboxyle et
(d) 0 à 6 % de leur poids d'acides mono- et/ou dicarboxyliques, contenant de 3 à 6 atomes de carbone, alpha, bêta-monooléfiniquement insaturés et/ou leurs anhydrides,
à des températures de 70 à 150 °C en présence de 0,25 à 10 % en poids, par rapport aux monomères, de cétoperoxydes à titre d'amorceurs de polymérisation et de 15 à 200 % en poids, par rapport aux monomères, de solvants indifférents, et séparation du ou des solvants pendant ou après la polymérisation et
(B) de 0, 01 à 10 % en poids, par rapport à la somme des composants (A) et (B) de benzophénone et/ou de dérivés de la benzophénone.

**2.** Colle thermofusible suivant la revendication 1, caractérisée en ce que le copolymère (A) a été préparé par la copolymérisation en solution de
(a) 2 à 15 % de son poids de (méth)acrylate de tétrahydrofurfuryle,
(b) 56 à 92,9 % de son poids d'esters de l'acide (méth)acrylique et d'alcanols contenant de 2 à 8 atomes de carbone,
(c) 5 à 25 % de son poids de monoester de l'acide succinique d'alcanediol-mono-(méth)acrylate et
(d) 0, 1 à 4 % de son poids d'acide acrylique et/ou méthacrylique et/ou maléique et/ou leurs anydrides,
à des températures qui varient de 80 à 110° C, en présence de 30 à 50 % en poids, par rapport aux monomères, d'isopropanol et/ou d'isobutanol.

**3.** Colle thermofusible suivant les revendications 1 et 2, caractérisée en ce qu'elle contient, à titre de composant (B), de 0, 5 à 5% en poids par rapport aux composants (A) et (B), de benzophénone, d'une hydroxybenzophénone et/ou d'acides benzophénonecarboxyliques.

**4.** Colle thermofusible suivant les revendications 1 à 4, caractérisée en ce qu'elle contient de 1 à 25 % de son poids en (C) de polyesters et/ou de polyéthers oléfiniquement insaturés, d'un poids moléculaire moyen (moyenne en nombre) de 250 à 5000.

**5.** Colle thermofusible suivant l'une quelconque des revendications 1 à 4, caractérisée en ce qu'elle contient, à titre de polyéther, un polytétrahydrofuranne dioléfiniquement insaturé.

**6.** Colle thermofusible suivant les revendications 4 et 5, caractérisée en ce que les copolymères (A) contiennent de 10 à 25 % de leurs poids du composant (c) et la colle thermofusible contient complémentairement de 0,05 à 5 %, par rapport aux quantités des composants (A), (B) et (C), d'un agent réducteur (D).